# EUROPEAN PATENT SPECIFICATION

(11) **EP 1 686 716 B1**
(45) Date of publication and mention of the grant of the patent: **13.01.2010**
(21) Application number: 06002057.5
(22) Date of filing: 01.02.2006
(51) Int. Cl.: H04L 1/00, H04L 1/18

(54) **Communication system, transmitter and receiver with adaptive retransmission depending on the type of data**
Kommunikationssystem, Sender und Empfänger mit adaptiver wiederholter Übertragung in Abhängigkeit des Datentyps
Système de communication, émetteur et récepteur avec retransmission adaptive selon le type de données

(30) Priority: 01.02.2005 JP 2005025650
(43) Date of publication of application: 02.08.2006
(73) Proprietor: NTT DoCoMo, Inc., Chiyoda-ku Tokyo 100-6150 (JP)
(72) Inventor: Motegi, Masayuki, Chiyoda-ku Tokyo 100-6150 (JP); Takahashi, Hideaki, Chiyoda-ku Tokyo 100-6150 (JP); Kato, Yasuhiro, Chiyoda-ku Tokyo 100-6150 (JP); Nakamura, Takehiro, Chiyoda-ku Tokyo 100-6150 (JP)
(74) Representative: HOFFMANN EITLE

(56) References cited:
- EP-A- 0 788 254
- EP-A- 0 905 939
- US-A1- 2002 183 026
- US-A1- 2003 161 323
- US-A1- 2003 202 501
- SHU LIN ET AL: "AUTOMATIC-REPEAT-REQUEST ERROR-CONTROL SCHEMES" IEEE COMMUNICATIONS MAGAZINE, IEEE SERVICE CENTER,NEW YORK, NY, US, vol. 22, no. 12, 1 December 1984 (1984-12-01), pages 5-17, XP000674086 ISSN: 0163-6804

## Description

The present invention relates to a communication system in which a transmitter transmits two types of data including real time data and non-real time data to a receiver. The present invention also relates to the receiver used for this communication system.

Conventionally, for a communication system in which a transmitter transmits data to a receiver, when a communication error occurs, a retransmission control technique has been employed. In the retransmission control technique, the receiver requires the transmitter to retransmit data which has caused an error, thus selectively correcting this data. For example, a technique using the retransmission control technique while taking QoS (Quality of Service) into account has been disclosed (for example, refer to Japanese Patent Laid-open Official Gazette No. 2002-271366).

Furthermore, according to an HSDPA (High Speed Downlink Packet Access) for a 3GPP (Third-Generation Partnership Project), a Hybrid ARQ (Automatic Repeat reQuest) of an Nch Stop And Wait method, i.e., the retransmission control technique is employed in a MAC-hs layer. It should be noted that the Hybrid ARQ (HARQ) is a technique for employing both error correction and retransmission control. Furthermore, the HARQ of the Nch Stop And Wait method is the technique whereby a plurality of HARQ processes are allocated for one mobile station, and a transmission confirmation and retransmission process for one transport block is performed in each HARQ process (for example, refer to 3GPP TS25.308 "UTRA High Speed Downlink Packet Access (HSDPA); Overall description; Stage 2").

In addition, there has been disclosed a technique which enables the retransmission control technique. According to this conventional example, an IP/UDP/RTP packet, for which identification information (including the data type for payload data and a time related data sequence) is additionally provided, is separated into an IP/UDP/RTP header and IP/UDP/RTP data, and the header and the data are transmitted through different channels. In accordance with the identification information extracted by the reception side, the IP/UDP/RTP data that a reception error has occurred is retransmitted. In this manner, the influence on the reconfiguration of the IP/UDP/RTP packet can be taken into account (for example, refer to Japanese Patent Laid-open Official Gazette No. 2003-188916).

In mobile communications beyond the third generation (3G), all of the data are transmitted or received as data units called packets. That is, it is anticipated that real time data that has been transmitted or received using CS (Circuit Switching), which conventionally is clearly distinguished from PS (Packet Switching), will also be transmitted or received as the packets by using a VoIP (Voice over IP) technique, for example.

For a conventional example that employs the retransmission control technique while taking QoS into account, this retransmission control is used only for non-real time data. That is, for 3G terms that are used, an RLC-AM (Acknowledged Mode) is applied to non-real time data, and an RLC-UM (Unacknowledged Mode) is applied to real time data.

Since only non-real time data is handled using HSDPA, HARQ, i.e., the retransmission control technique is employed only for non-real time data.

On the other hand, in the conventional example that employs the retransmission control technique while taking the influence on the reconfiguration of an IP/UDP/RTP packet into account, mainly in order to save a transfer band, retransmission of a real time packet is performed based on the characteristic of an IP/UDP/RTP packet (data information which includes the data type of payload data and a time related data sequence).

However, non-real time data exchanged by the PS and real time data exchanged as packets using the VoIP technique have opposing characteristics. Therefore, it is not preferable for the retransmission control process most appropriate for real time data to be performed for non-real time data. Likewise, it is not preferable for the retransmission control process that is most appropriate for non-real time data to be performed for real time data.
US patent application US2003/161323 A1 describes that a QoS information identification unit receives a packet to be transmitted and, based on QoS information, identifies the QoS type of the packet, and outputs the obtained QoS type to an adaptive wireless parameter controller as requested QoS information. The adaptive wireless parameter controller adaptively defines a retransmission parameter, an encoding scheme and a modulation scheme, based on the requested QoS information received from the QoS information identification unit, observed QoS information at the receiving side notified from the receiving side, and transmission path information. A transmission sequencing controller performs retransmission control for the packet based on the retransmission parameter defined therebefore. A data encoder encodes the packet based on the encoding scheme defined therebefore. A data modulator modulates the packet based on the modulation scheme defined therebefore.

US patent application US2002/183026 describes that, in a wireless communication system for controlling the data communication quality between the transmission system to transmit contents and the mobile wireless terminal to receive contents from said transmission system via the predetermined communication path, since the transmission system changes the modulation system in the data output unit corresponding to the type of contents to be transmitted to the mobile wireless terminal, the data communication quality between said transmission system and the mobile wireless terminal can be controlled. Thereby, the data transmission from the transmission system to the mobile wireless terminal is executed according to the modulation system best suited to the type of contents holding the predetermined communication quality.

European patent application EP-A-0 905 939 describes a method for improving data transfer performance over communications networks connecting data networks and users using adaptive communications formatting. Adaptive communications formatting includes encoding (or compressing) the data and applying error control schemes to reduce the amount of data being transmitted and to correct and/or conceal errors occurring during data transmission. One embodiment uses a set of transcoding techniques to encode (or compress) the data and a set of error control schemes to correct and/or conceal errors occurring during data transmission. The particular sets of transcoding techniques and error control schemes selected to format the data are adaptive to factors, such as the nature of the communications network connecting a user to an access server on the data network, the preferences of the user, and the data type of the data being transmitted to the user (or the access server).

While taking the above described problem into account, an object of the present invention is to provide a communication system in which appropriate retransmission control operations for two types of data, respectively, real time data and non-real time data, can be performed, and a transmitter and a receiver used for this communication system.

According to the present invention, there is provided a communication system according to appended independent Claim 1, and a receiver according to appended independent Claim 10. Preferred embodiments are defined in the appended dependent claims.

For a better understanding of the invention and to show how the same may be carried into effect, reference will now be made, by way of example, to the accompanying drawings, in which:
Fig. 1 is a diagram showing the configuration of a communication system according to a first embodiment;
Fig. 2 is a diagram showing the configuration of a base station according to the first embodiment;
Fig. 3 is a diagram showing the configuration of a mobile station according to the first embodiment;
Figs. 4A and 4B are diagrams showing a determination result holder according to the first embodiment;
Fig. 5 is a flowchart showing a data transmission method according to the first embodiment;
Fig. 6 is a flowchart showing the parameter setting process performed by the base station according to the first embodiment;
Fig. 7 is a flowchart showing a data reception method according to the first embodiment;
Fig. 8 is a flowchart showing the parameter setting process performed by the mobile station according to the first embodiment;
Fig. 9 is a flowchart showing a data transmission method according to a second embodiment;
Fig. 10 is a flowchart showing a data reception method according to the second embodiment;
Fig. 11 is a flowchart showing the process, according the second embodiment, in which a mobile station sets a parameter in accordance with a data type;
Figs. 12A to 12E are diagrams for explaining the process according to a third embodiment of the present invention for transmitting and analyzing a status report;
Fig. 13 is a flowchart showing a data transmission method according to the third embodiment; and
Fig. 14 is a flowchart showing a data reception method according to the third embodiment.

According to a first arrangement, a communication system, in which a transmitter transmits two types of data including real time data and non-real time data to a receiver, for each data block includes: a retransmission requester for transmitting a request for retransmission of an error data block which is the data block that is not correctly received by the receiver, regardless of whether the data type is real time or non-real time; a retransmitter for retransmitting the error data block in accordance with the request for retransmission; a data type identifier for identifying the data type as real time or non-real time; and a parameter adjuster for adjusting a parameter for data retransmission control of the two data types based on the data type identified by the data type identifier to adjust.

According to the communication system of the first arrangement, the retransmission requester transmits the request for the retransmission of the error data block for the two types of data including real time data and non-real time data, and the retransmitter retransmits the error data block. Furthermore, the data type identifier identifies the type of data to be transmitted or received as real time or non-real time, and the parameter adjuster adjusts the parameter for retransmission control based on the identified data type. Therefore, appropriate retransmission control process can be performed for the two data types including real time data and non-real time data.

For the communication system of the first arrangement, the parameter includes at least one of a window size, a delay, and a maximum retransmission count, which are employed for data retransmission control. The delay can include a delay on the transmission side which is employed by the transmitter, and a delay on the reception side which is employed by the receiver. In addition, the window size can include a transmission window size used by the transmitter and a reception window size used by the receiver.

Moreover, for the communication system of the first arrangement, the parameter adjuster may provide a value for the window size, the delay, and the maximum transmission count for the data type of non-real time are greater than the value provided for the data type of real time.

Furthermore, the communication system of the first arrangement may further includes: a reception status notification generator for generating one reception status notification indicating whether or not the receiver has correctly received the data blocks for a plurality of data blocks when the data type is non-real time , or for generating one reception status notification for one data block when the data type is real time. The request for retransmission is the reception status notification indicating that the transport block has not been correctly received.

The communication system of the first arrangement may further include: a reception status notification requester for requesting the receiver to transmit the reception status notification indicating whether the data block has been correctly received by the receiver, when the data type is non-real time, and a reception status notification generator for generating the reception status notification. The retransmission requester transmits the reception status notification generated by the reception status notification generator when the request for the reception status notification is received from the reception status notification requester. The retransmission request is the reception status notification indicating that the transport block has not been received correctly.

For the communication system of the first arrangement, the reception status notification generator may provide redundant data that enables error detection for the reception status notification. The data length of the redundant data for the data type of non-real time may be greater than the data length for the data type of real time.

For the communication system of the first arrangement, the retransmission requester may repetitively transmit the reception status notification for a predetermined number of times. the predetermined number of times for the data type of non-real time may be greater than the number of times for the data type of real time.

The communication system of the first arrangement may further include: a transport block generator for generating a transport block by dividing or coupling a higher block which is a data unit to be handled in a protocol layer higher than a protocol layer which handles the data block, when the data type is non-real time, and generating a transport block by dividing the higher block, when the data type is real time and a higher block reconfigurer for performing a reverse process of generating the transport block, the reverse process being a process for reconfiguring the higher block from the transport block generated by the transport block generator.

For the communication system of the first arrangement, the data type identifier may identify the data transmitted through a single communication channel as real time data, when both real time data and non-real time data are transmitted through the single communication channel.

For the communication system of the first arrangement, the data type identifier may identify the data type based on a traffic class identifier included in the data block or on a traffic class transmitted by a device other than the transmitter and the receiver, to the transmitter.

According to a second arrangement, a transmitter which transmits to a receiver two types of data including real time data and non-real time data, for a respective data block, includes: a retransmission request acquirer for acquiring a request for retransmission of an error data block which is the data block which has not been correctly received by the receiver, regardless of whether the data type is real time or non-real time; a retransmitter for retransmitting the error data block in accordance with the request for retransmission; a data type identifier for identifying the data type as real time or non-real time; and a parameter adjuster for adjusting a parameter for data retransmission control for the two data types based on the data type identified by the data type identifier.

According to a third arrangement, a receiver which receives two types of data including real time data and non-real time data from a transmitter two types of data, for a respective data block, includes: a retransmission requester for transmitting a request for retransmission of an error data block which is a data block that has not been correctly received by the receiver, regardless of whether the data type is real time or non-real time; an error data block receiver for receiving the error data block as transmitted in accordance with the request for retransmission; a data type acquirer for acquiring the data type from the transmitter; and a parameter adjuster for adjusting a parameter for data retransmission control for the two data types based on the data type identified by the data type acquirer.

As described above, it is possible to provide a communication system in which appropriate retransmission control operations can be applied to two data types including real time data and non-real time data, and a transmitter and a receiver used for this communication system.

### (Communication System)

Preferred embodiments of the present invention will now be described while referring to the accompanying drawings. In the following description of the drawings, identical or similar constituents are set by identical or similar reference numerals. It is to be noted, however, that the drawings merely show schematic configurations of the present invention.

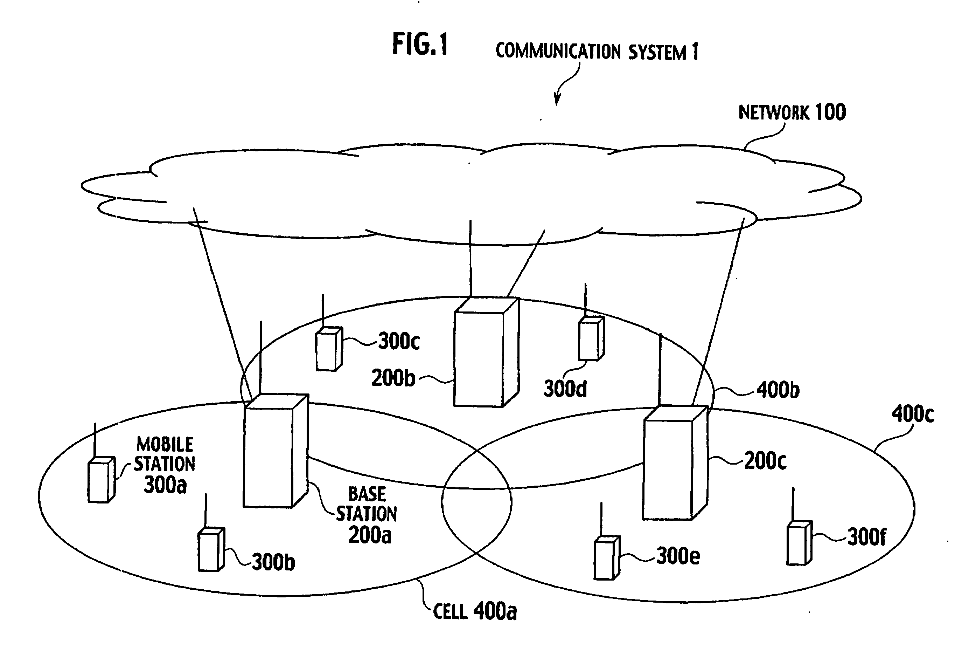

Fig. 1 is a diagram showing an example configuration for a communication system 1 according to an embodiment of the present invention. In the communication system 1, two types of data, real time data and non-real time data, are exchanged for each data block. The communication system 1 includes a network 100, a plurality of base stations 200 (200a to 200c) connected to the network 100, and a plurality of mobile stations 300 (300a to 300f). Since the base stations 200a to 200c have the same configuration and the mobile stations 300a to 300f have the same configuration, they are hereinafter referred to simply as the base stations 200 and the mobile stations 300.

The base stations 200 form service areas, i.e., cells 400 (400a to 400c) to enable the exchange of data with the mobile stations 300.

When the base stations 200 transmit data to the mobile stations 300, the base stations 200 serve as transmitters, and the mobile stations 300 serve as receivers. On the other hand, when the mobile stations 300 transmit data to the base stations 200, the mobile stations 300 serve as transmitters, and the base stations 200 serve as receivers.

Data are exchanged for each data block of a predetermined size. In the following embodiments, a data block is called a transport block. In this case, a transport block is the minimum data unit that can be processed in a MAC (Media Access Control) layer.

### [First Embodiment]

### (Transmitter)

An explanation will now be given for a case in which the base stations 200 transmit data to the mobile stations 300, i.e., the base stations 200 serve as transmitters.

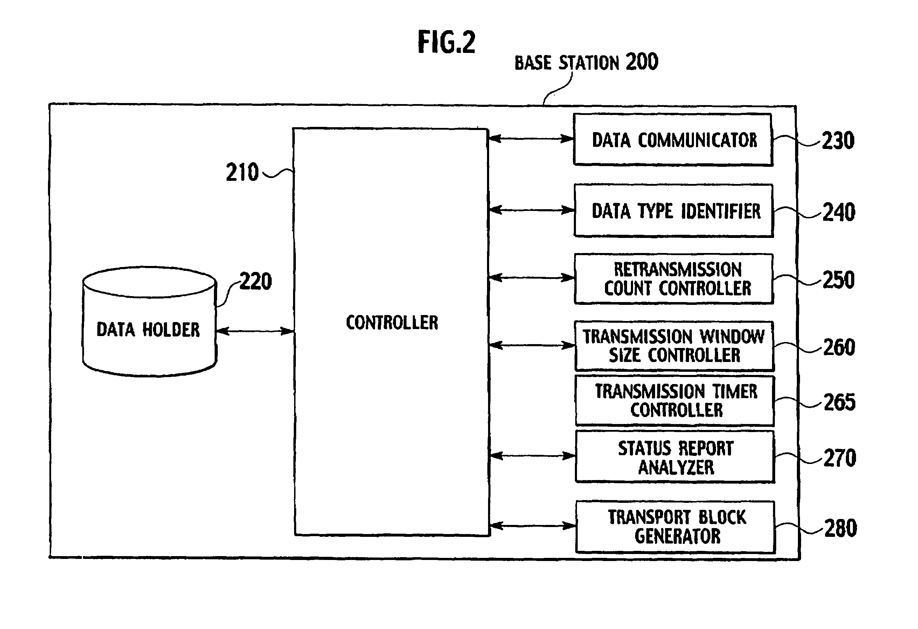

As shown in Fig. 2, each of the base stations 200 includes: a controller 210, a data holder 220, a data comunicator 230, a data type identifier 240, a retransmission count controller 250, a transmission window size controller 260, a transmission timer controller 265, a status report analyzer 270 and a transport block generator 280.

The controller 210 controls all the other components, and the operation of the entire base station 200. The controller 210 also serves as a parameter adjuster that employs a data type to adjust parameters used by the retransmission count controller 250, the transmission window size controller 260 and the transmission timer controller 265, which will be described later. Non-real time data tolerates delays, to a certain degree, but not data errors. On the other hand, real time data cannot tolerate large delays, but it tolerates data errors to a certain degree. Therefore, contrary to when the data type handled is real time, when non-real time data is handled, the controller 210 sets a large value for the maximum retransmission count and a large transmission window size.

Specifically, the controller 210 obtains a data type identified by the data type identifier 240. When the obtained data type is non-real time, the controller 210 sets NR1 as the maximum retransmission count, and when the data type is real time, it sets NR2 which is smaller than NR1. For example, the NR1 is about 10, and NR2 ranges from about 0 to 3. In a mobile communication system of the future, a TTI (Transmission Time Interval), which is the minimum time interval at which transport blocks can be transmitted, will be set that is extremely smaller than 10 ms in the 3G. Therefore, it will be possible to transmit transport blocks multiple times within a short period of time. Accordingly, even for real time data, which is sensitive to delays, several retransmissions will be possible.

In addition, when the data type is non-real time, the controller 210 will set SWS1 as the transmission window size, and when the data type is real time, it will set SWS2 which is smaller than SWS1. Furthermore, when the data type is non-real time, the controller 210 will set ST1 as a delay on the transmission side, and when the data type is real time, it will set ST2, which is smaller (shorter) than ST1.

In this embodiment, the values of NR1, NR2, SWS1, SWS2, ST1 and ST2 are preset by the base station 200. It should be noted, however, that these values may be determined by the controller 210, or by another device such as a radio network controller (RNC), and transmitted to the base station 200.

The data holder 220 holds copies of the transport blocks transmitted to the mobile station 300. The copies of the transport blocks are stored by the data comunicator 230, which will be described later.

The data comunicator 230 exchanges transport blocks with the mobile station 300. In accordance with a request received from the transmission window size controller 260, the data comunicator 230 transmits a transport block. However, before transmitting the transport block, the data comunicator 230 generates a copy which is stored in the data holder 220. In addition, the data comunicator 230 notifies the transmission timer controller 265 which will be described later, that the transport block copy has been stored.

The data comunicator 230 also obtains a status report transmitted by the mobile station 300. Therefore, the data comunicator 230 also serves as a retransmission request acquirer that receives a retransmission request for an error data block, which is a transport block that has not been correctly received by the receiver. The data comunicator 230 inputs the obtained status report to the status report analyzer 270.

Moreover, the data comunicator 230 retransmits a transport block in accordance with a request issued by the status report analyzer 270. Specifically, the data comunicator 230 obtains a transport block from the data holder 220, the transport block corresponding to a TSN (Transmission Sequence Number) which is a sequence number for a transport block and is included in the request from the status report analyzer 270. Thereafter, the data comunicator 230 transmits the transport block to the mobile station 300.

Furthermore, when the data type is non-real time, the data comunicator 230 transmits polling data to the mobile station 300 for requesting a status report. In this case, the status report is a reception status notification indicating whether or not the mobile station 300 has correctly received a transport block. Therefore, the data comunicator 230 also serves as a reception status notification requester. Specifically, when the data type obtained from the data type identifier 240, which will be described later, is non-real time, the data comunicator 230 transmits polling data to the mobile station 300. Transmitting the polling data to the mobile station 300 may be periodically performed and the results may be periodically transmitted to the mobile station 300. Or, when a request for the transmission of a transport block is received from the transmission window size controller 260, the data comunicator 230 may perform polling and transmit the results. When there is a transport block to be transmitted, the data comunicator 230 may transmit the transport block, with the polling data being included. Or when there is no transport block to be transmitted, the data comunicator 230 may transmit only the polling data to the mobile station 300.

Furthermore, when a communication link is established between the base station 200 and the mobile station 300, the data comunicator 230 notifies the mobile station 300 of the data type obtained from the data type identifier 240.

The data type identifier 240 identifies the type of data to be transmitted as either real time or non-real time.

To identify a data type, the data type identifier 240 employs, for example, a traffic class identifier (DSCP (Diffserv Code Point)) included in the header of an IP packet. Or, for identification of a data type, the data type identifier 240 may employ a traffic class indicated by an RAB (Radio Access Bearer) message, which is transmitted via a signal to a RAN (Radio Access Network) by a device other than the base station 200 and the mobile station 300, e.g., a device included in a CN (Core Network) in a higher protocol layer, such as the RANAP, in the 3G. However, the data type identification method is not limited to the above described examples.

Furthermore, the data type identifier 240 also determines whether real time data or non-real time data is to be processed for each communication channel. When the two types of data, real time data and non-real time data, are to be transmitted via one communication channel, the data type identifier 240 may identify the type of data to be transmitted via the communication channel as real time.

The retransmission count controller 250 controls the number of times a transport block is retransmitted. Specifically, based on the data type identified by the data type identifier 240, the retransmission count controller 250 obtains the maximum retransmission count set by the controller 210. Here, the maximum retransmission count is the maximum value for the number of times one transport block can be retransmitted.

When the retransmission count controller 250 receives from the status report analyzer 270, which will be described later, a notification indicating that a status report including NACK is obtained, the retransmission count controller 250 increments, by one, the retransmission count that is held for each transport block. When the retransmission count reached the maximum retransmission count, the retransmission count controller 250 discards the transport block stored in the data holder 220.

The transmission window size controller 260 controls a transmission window size. Specifically, based on the data type identified by the data type identifier 240, the transmission window size controller 260 obtains the transmission window size set by the controller 210. It should be noted that the transmission window size defines the number of transport blocks that can be transmitted without transmission acknowledgement being received (under a condition during which a status report is not received). Furthermore, copies of transport blocks that have been transmitted without the transmission acknowledgement are stored in the data holder 220. Therefore, the transmission window size controller 260 examines the data holder 220 to determine whether the request for the transmission of the transport block should be issued to the data comunicator 230.

As described above, the data comunicator 230, the retransmission count controller 250 and the transmission window size controller 260 serve as a retransmitter that, in accordance with a status report indicating an incorrect reception, retransmits an error transport block, which is a transport block that has not been correctly received.

The status report analyzer 270 obtains, from the data comunicator 230, a status report transmitted by the mobile station 300, and analyzes the status report to determine whether or not a transport block has been correctly received. It should be noted that the status report indicates whether or not a transport block has been correctly received.

The transmission timer controller 265 manages a transmission side delay. Here, the transmission side delay is the time during which a copy of a transmitted transport block is held for retransmission. Specifically, the transmission timer controller 265 obtains the transmission side delay set by the controller 210, and uses this time to set a timer. Then, the transmission timer controller 265 starts the timer when a notification indicating that a copy of a transport block has been stored is obtained from the data comunicator 230. When a notification is received indicating that the pertinent transport block has been correctly received, the transmission timer controller 265 halts the timer. On the other hand, when such a notification is not received before the transmission side delay set to the timer has elapsed, the copy of the transport block in the data holder 220 is discarded.

When the status report analyzer 270 judges that the content of the status report received from the mobile station 300 is an ACK (the transport block has been correctly received), the transport block in the data holder 220, which corresponds to the status report is discarded. On the other hand, when the status report analyzer 270 judges that the status report content is a NACK (the transport block has not been correctly received), a request for the retransmission of the corresponding transport block is issued to the data comunicator 230. In addition, the status report analyzer 270 transmits the notification indicating that the status report content was a NACK to the retransmission count controller 250.

It should be noted that since a status report for non-real time data is generated for a group of transport blocks, the status report analyzer 270 extracts, from the status report, TSN of transport blocks that have not. been correctly received, i.e., for which the status report was determined to be a NACK, and then performs a retransmission process. On the other hand, since a status report for real time data is generated for each transport block, the status report analyzer 270 immediately performs the retransmission process when a NACK is included in the status report.

Based on a higher block, which is a data unit to be handled in a protocol layer that is higher than the MAC layer, the transport block generator 280 generates a transport block having a size that can be handled in the MAC layer.

Specifically, the transport block generator 280 receives a data type from the data type identifier 240 via the controller 210. When the data type is non-real time, the transport block generator 280 generates a transport block by dividing a higher block, or coupling higher blocks. On the other hand, when the data type is real time, the transport block generator 280 generates a transport block by dividing a higher block, but does not couple higher blocks. It should be noted that the transport block is also the minimum unit of data that is to be retransmitted.

### (Receiver)

An explanation will now be given for the transmission of data from a base station 200 to a mobile station 300, i.e., a case in which the mobile station 300 serves as a receiver.

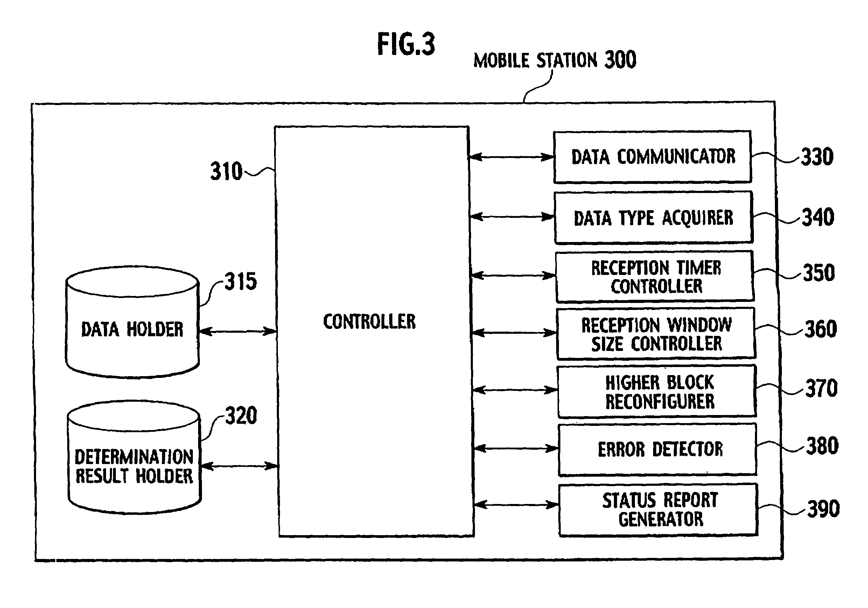

As shown in Fig. 3, the mobile station 300 includes: a controller 310, a data holder 315, a determination result holder 320, a data comunicator 330, a data type acquirer 340, a reception timer controller 350, a reception window size controller 360, a higher block reconfigurer 370, an error detector 380 and a status report generator 390.

The controller 310 controls the other components and the operation of the entire mobile station 300. The controller 310 also serves as a parameter adjuster that employs a data type to adjust parameters used by the reception timer controller 350 and the reception window size controller 360, which will be described later. It should be noted that non-real time data is tolerant of delays to a certain degree, but is sensitive to errors, while real time data is not tolerant of delays, but is tolerant of errors. Therefore, when a data type is non-real time, compared with when the data type is real time, the controller 310 sets a large reception window size and a long delay when waiting for an error data block for which a retransmission request was transmitted.

In addition, in accordance with the data type, the controller 310 determines a method for generating a status report, either for "each group of transport blocks" or "for each transport block". When the data type is non-real time, the data tolerate delays, to a certain degree, so that a status report may be generated for the determination results for a plurality of transport blocks and be transmitted to the base station 200. Therefore, the controller 310 determines the method for generating a status report for "each group of transport blocks". On the other hand, when the data type is real time, the data are sensitive to delays, so that a status report may be generated for the determination results for each transport block and that it be transmitted to the base station 200. Therefore, the controller 310 determines the method for generating a status report for "each transport block".

Furthermore, the controller 310 performs a sequential control process for arranging the sequence of transport blocks determined that it has been correctly received, and transmits the results to a higher protocol layer.

The data holder 315 holds transport blocks received by the mobile station 300. Specifically, the data holder 315 obtains a transport block from the error detector 380, which will be described later, and holds the transport block at an appropriate location based on the TSN. That is, the data holder 315 has a function to perform the TSN sequential control process.

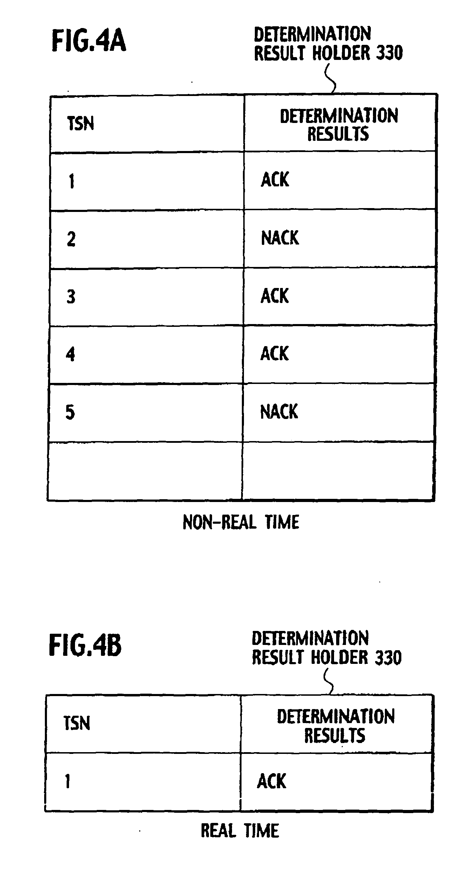

As shown in Figs. 4A and 4B, the determination result holder 320 holds, for each received transport block, determination results obtained by the error detector 380 which will be described later. When the data type is non-real time, the generation of a status report for "each group of transport blocks" is determined. Accordingly, as shown in Fig. 4A, the determination result holder 320 holds the determination results which correspond to multiple transport blocks. Fig. 4A is a diagram showing the state of the determination result holder 320 in which, after a status report has been generated by receiving the preceding polling data and five transport blocks are received.

On the other hand, when the data type is real time, generation of a status report "for each transport block" is determined. Therefore, as shown in Fig. 4B, the determination result holder 320 holds determination results that correspond to one transport block at maximum.

The data comunicator 330 accepts a transport block transmitted by the base station 200. And the data comunicator 330 transmits to the base station 200 a status report obtained from the status report generator 390. Accordingly, by transmitting a status report the content of which is a NACK, the data comunicator 330 serves as a retransmission requester that, regardless of whether the data type is real time or non-real time, transmits a request for retransmission of an error transport block which is a transport block that has not been correctly received by the mobile station 300. The data comunicator 330 also serves as an error data block receiver that receives an error transport block that is transmitted in accordance with the retransmission request.

Furthermore, when the polling data is received from the base station 200, the data comunicator 330 notifies the status report generator 390 that it has received the polling data, and obtains a status report from the status report generator 390. Thus, when the polling data are received from the base station 200, the data comunicator 330 transmits a status report to the base station 200.

Moreover, the data comunicator 330 transmits a transport block received from the base station 200 to the reception window size controller 360.

The data type acquirer 340 receives, via the data comunicator 330, a data type notification transmitted by the base station 200, and obtains the data type.

The reception timer controller 350 manages a reception side delay for waiting for holding a transport block for the sequential control process. That is, the reception side delay is a period waited in a case in which a second transport block scheduled to be received later is obtained before a first transport block which is supposed to be received first. Accordingly, the reception side delay is the period from the acquisition of the second transport block to the acquisition of the first transport block. Specifically, the reception timer controller 350 obtains the reception side delay set by the controller 310, and set a timer according to the reception delay. When the second transport block, which is to be received later, is obtained before the first transport block, which is to be received first, the reception timer controller 350 starts the timer, and halts the timer when the first transport block is received via the data comunicator 330. On the other hand, when the first transport block is not received via the data comunicator 330 before the reception side delay set for the timer has elapsed, the reception timer controller 350 determines that the first transport block has not been received.

The reception window size controller 360 controls the range for the transport block or blocks accepted by the mobile station 300. Specifically, the reception window size controller 360 obtains a reception window size set by the controller 310. It should be noted that the reception window size defines a range for the transport block or blocks that can be accepted by the mobile station 300. The reception window size controller 360 determines the range of TSNs for the transport block or blocks which may be transmitted by the base station 200, based on the reception window size and the TSNs which are the sequence numbers for previously received transport blocks.

When the TSN of a transport block obtained from the error detector 380 falls within the determined TSN range, the reception window size controller 360 stores the transport block in the data holder 315. On the other hand, when the TSN of a transport block obtained via the data comunicator 330 exceeds the determined TSN range, the reception window size controller 360 discards the transport block.

The higher block reconfigurer 370 reconfigures a higher block based on a transport block generated by the base station 200. That is, the higher block reconfigurer 370 performs the reverse of the process performed by the transport block generator 280 of the base station 200. Specifically, the higher block reconfigurer 370 divides or couples transport blocks stored in the data holder 315 to reconfigure a higher block. It should be noted that when the data type is real time, the base station 200 does not perform the coupling of data blocks to generate a transport block, and accordingly, the higher block reconfigurer 370 does not perform the division of a transport block.

The error detector 380 determines whether or not a transport block transmitted by the base station 200 has been correctly received by the mobile station 300. Specifically, the error detector 380 determines whether or not an error is included in the transport block obtained via the data comunicator 330. For the detection of an error included in a transport block, the error detector 380 employs, for example, a CRC (Cyclic Redundancy Code) which is provided for the transport block by the base station 200.

When an error is not included in a transport block, the error detector 380 determines that the transport block has been correctly received, and regards the determination results as an ACK. On the other hand, when an error is included in a transport block, the error detector 380 determines that the transport block has not been correctly received, and regards the determination results as a NACK. Then, the error detector 380 stores the determination results in the determination result holder 320.

Further, the error detector 380 obtains a status report generation method determined by the controller 310. When the generation method for a status report is for "each transport block", the error detector 380 notifies the status report generator 390 that the determination results are stored in the determination result holder 320.

When the error detector 380 determines that the transport block has been correctly received, the transport block is transmitted to the reception window size controller 360. On the other hand, when the error detector 380 determines that the transport block has not been correctly received, the transport block is discarded.

The status report generator 390 generates a status report. That is, the status report generator 390 is a reception status notification generator for generating a reception status notification. The status report generator 390 inputs the generated status report to the data comunicator 330.

It should be noted that when the data type is non-real time, the status report generator 390 generates a status report for a group of transport blocks, and when the data type is real time, it generates a status report for each transport block. Accordingly, in this embodiment, the status report is not only a notification indicating that one transport block has been correctly received, but also a notification indicating that a plurality of transport blocks have been correctly received.

The status report generator 390 generates a status report that includes information stored in the determination result holder 320. When the data type is real time, the status report generator 390 generates a status report upon the reception of a notification, from the error detector 380, indicating that the determination results are stored in the determination result holder 320. On the other hand, when the data type is non-real time, the status report generator 390 generates a status report upon the reception of a notification, from the data comunicator 230 of the base station 200, indicating that the polling data have been received via the data comunicator 330. Therefore, when the data type is non-real time, a status report is generated for a plurality of transport blocks, whereas when the data type is real time, a status report is generated for one transport block. However, when only one set of determination results is stored in the determination result holder 320 at the time of the reception of the polling data, one status report is generated for one transport block.

### (Data Transmission Method)

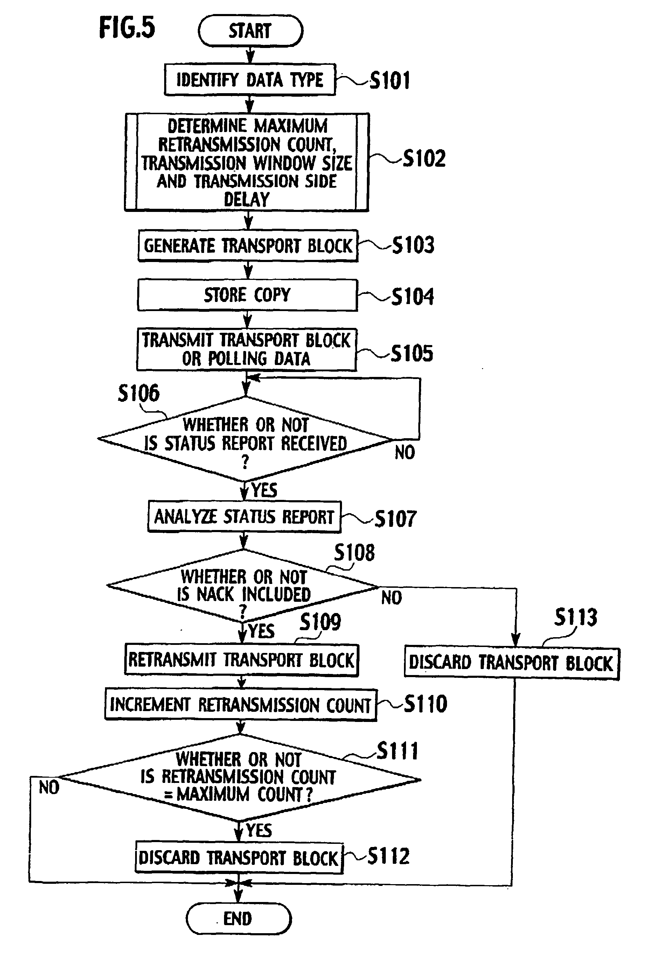

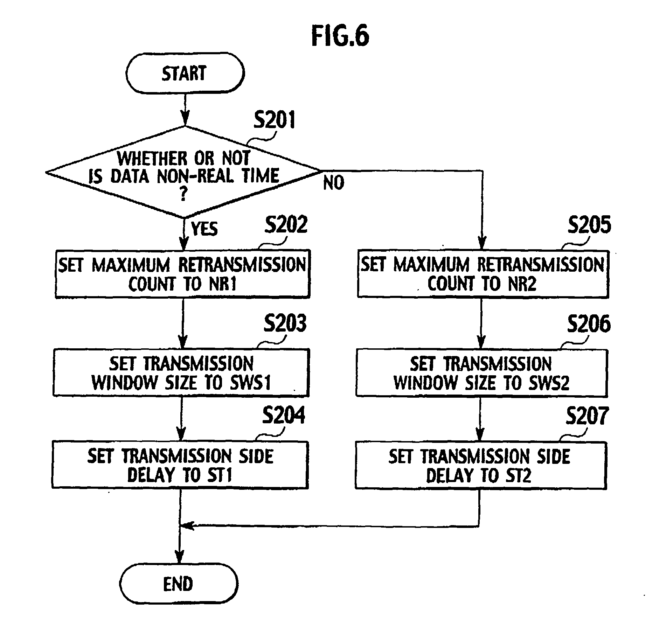

While referring to Figs. 5 and 6, an explanation will now be given for a data transmission method performed by the base stations 200 that are included in the communication system 1 and that serve as transmitters.

Fig. 5 is a flowchart showing the process in which each of the base stations 200 transmits a higher block as a transport block, and if necessary, retransmits this transport block.

In step S101, the base station 200 establishes a communication link with the mobile station 300, and the data type identifier 240 identifies the data type of data that is to be exchanged by the base station 200 and the mobile station 300.

In step S102, based on the data type, the controller 210 determines the maximum retransmission count, the transmission window size and the transmission side delay.

In step S103, when the data type is real time, the transport block generator 280 divides a higher block to generate a transport block. On the contrary, when the data type is non-real time, the transport block generator 280 divides a higher block or couples higher blocks to generate a transport block.

In step S104, the data comunicator 230 generates a copy of the transport block to be transmitted, and stores the copy in the data holder 220.

In step S105, the data comunicator 230 transmits the transport block or polling data to the mobile station 300. It should be noted that the polling data may be included in the transport block.

In step S106, the data comunicator 230 waits until a status report is received.

In step S107, the status report analyzer 270 analyzes the status report received in step S106.

In step S108, the status report analyzer 270 determines whether or not a NACK is included in the status report, i.e., whether or not the transmitted transport block has been correctly received.

When the status report analyzer 270 determines in step S108 that a NACK is included in the status report, in step S109, in accordance with a request received from the status report analyzer 270, the data comunicator 330 retransmits the transport block corresponding to the status report.

In step S110, the retransmission count controller 250 increments, by one, the retransmission count held for each transport block.

In step S111, the retransmission count controller 250 determines whether or not the retransmission count has reached the maximum value.

When the retransmission count controller 250 determines in step S111 that the retransmission count has reached the maximum value, in step S112, the retransmission count controller 250 discards the corresponding transport block stored in the data holder 220.

When the status report analyzer 270 determines in step S108 that a NACK is not included in the status report, i.e., all of the contents of the status reports are ACKs, in step S113, the status report analyzer 270 discards the transport blocks corresponding to the status report from the data holder 220.

In step S201, the controller 210 determines whether or not the data type identified by the data type identifier 240 is non-real time.

When it is determined in step S201 that the data type is non-real time, in step S202, the controller 210 sets maximum transmission count NR.1.

In step S203, the controller 210 sets transmission window size to SWS1.

In step S204, the controller 210 sets transmission side delay to ST1.

On the other hand, when it is determined in step S201 that the data type is not non-real time, i.e., is real time, in step S205, the controller 210 sets the maximum retransmission count to NR2, which is smaller than NR1.

In step S206, the controller 210 sets transmission window size to SW2, which is smaller than SW1.

In step S207, the controller 210 sets transmission side delay to ST2, which is shorter than ST1.

### (Data Reception Method)

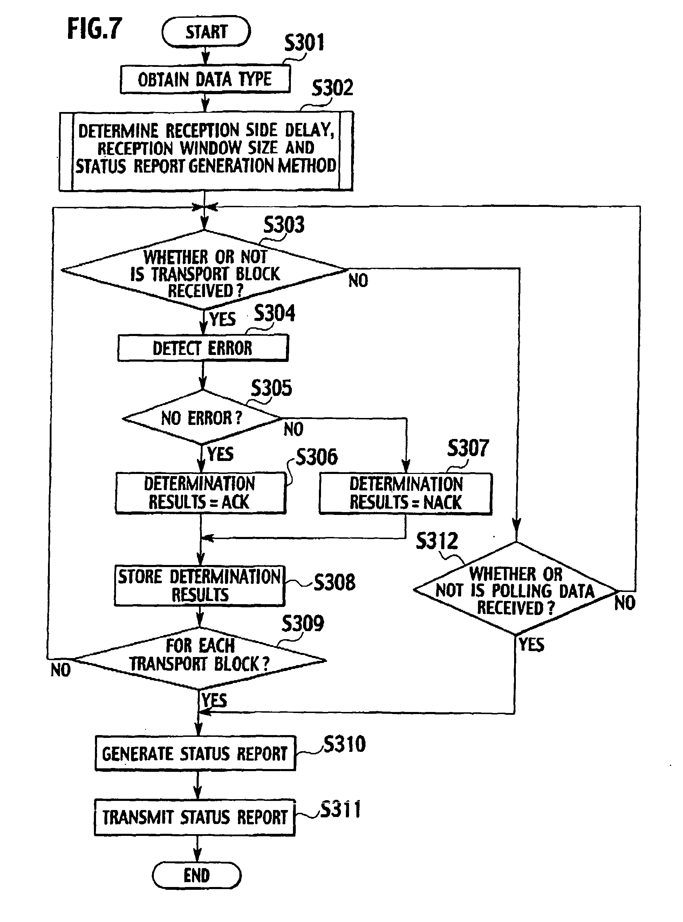

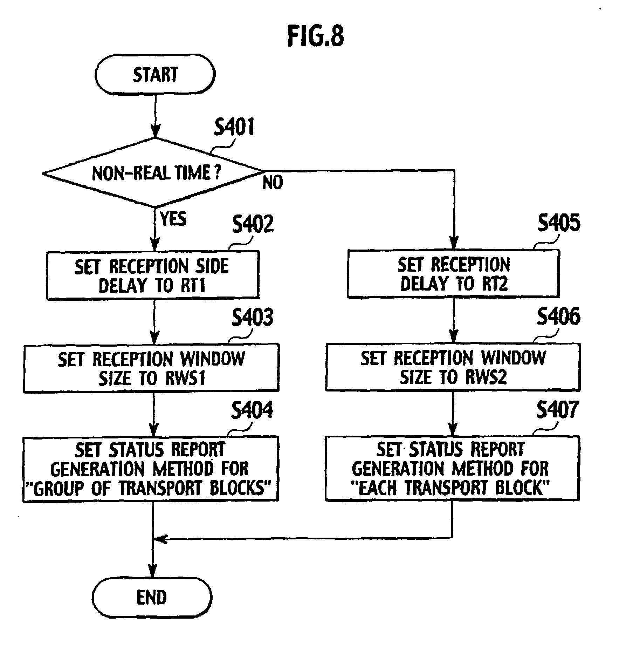

While referring to Figs. 7 and 8, an explanation will now be given for a data reception method performed by the mobile stations 300 that are included in the communication system 1 and that serve as receivers.

Fig. 7 is a flowchart showing the process whereby each of the mobile stations 300 receives a transport block, and requests a retransmission of the transport block, if necessary.

In step S301, the data type acquirer 340 receives a data type notLieation from the base station 200, and obtains a data type.

In step S302, based on the data type, the controller 310 determines the reception side delay, the reception window size and the status report generation method.

In step S303, the data comunicator 330 determines whether or not a transport block has been received.

When it is determined in step S303 that a transport block has been received, in step S304 the error detector 380 performs an error detection process for the received transport block.

In step S305 the error detector 380 determines whether or not an error is included in the transport block.

When the error detector 380 determines in step S305 that an error is not included in the transport block, in step S306 the error detector 380 determines that the transport block has been correctly received and regards the determination results as an ACK.

On the other hand, when the error detector 380 determines in step S305 that an error is included in the transport block, in step S307 the error detector 380 determines that the transport block has not been correctly received and regards the determination results as a NACK.

In step S308, the error detector 380 stores the determination results in the determination result holder 320.

In step S309, the error detector 380 determines whether or not the status report generation method is for "each transport block".

When the error detector 380 determines in step S309 that the status report generation method is "for each transport block", in step S310 the status reporter 390 receives the notification from the error detector 380, generates a status report which includes information stored in the determination result holder 320, and inputs the status report to the data comunicator 330.

In step S311, the data comunicator 330 transmits the status report to the base station 200.

On the other hand, when the data comunicator 330 determines in step S303 that a transport block has not been received, in step S312 the data comunicator 330 determines whether or not the polling data have been received.

When the data comunicator 330 determines in step S312 that the polling data have been received, in step S310, the status report generator 390 receives a notification to that effect from the data comunicator 330, generates a status report that includes information stored in the determination result holder 320, and inputs the status report to the data comunicator 330. Then, the data comunicator 330 transmits the status report to the base station 200 in step S311.

When the error detector 380 determines in step S309 that the status report generation method is not "for each transport block", or when the data comunicator 330 determines in step S312 that the polling data has not been received, program control returns to step S303 to repeat the process.

Fig. 8 is a flowchart showing the process for setting the reception side delay and the reception window size and for setting the status report generation method in accordance with the data type. That is, Fig. 8 is a flowchart for explaining the process performed in step S302 in Fig. 7.

In step S401, the controller 310 determines whether or not the data type obtained by the data type acquirer 340 is non-real time.

When the controller 310 determines in step 5401 that the data type is non-real time, in step S402 the controller 310 sets the reception side delay to RT1.

In step S403, the controller 310 sets the reception window size RWS1.

In step S404, the controller 310 sets the status report generation method for "each group of transport blocks".

On the other hand, when the controller 310 determines in step S401 that the data type is not non-real time, i.e., is real time, in step S405 the controller 310 sets reception side delay to RT2, which is smaller (shorter) than RT1.

In step S406, the controller 310 sets the reception window size to RWS2, which is smaller than RWS1.

In step S407, the controller 310 sets the status report generation method "for each transport block".

### (Effect)

Conventionally, the retransmission control is not generally performed for real time data. However, by employing the retransmission control technique for real time data, data errors can be prevented.

In addition, conventionally, there has been disclosed the retransmission control technique for non-real time data. However, non-real time data is tolerant of delays to a certain degree, and is sensitive to errors. On the other hand, real time data is tolerant of errors to a certain degree, but cannot allow large delays. That is, a tradeoff relationship is established between the characteristics of real time data and non-real time data. Therefore, when the same retransmission control operation is performed for real time data and non-real time data, a delay becomes a problem for the real time data, while an error cannot appropriately be removed from non-real time data.

Thus, when the retransmission control technique is employed for two different data types including real time and non-real time, parameters used for this technique must be adjusted or tuned in accordance with the data type.

According to the communication system 1 of this embodiment, the data type identifier 240 determines whether the type of the data to be exchanged is real time or non-real time, and based on the data type thus identified, the controller 210 adjusts the parameters that are employed by the retransmission count controller 250, the transmission window size controller 260 and the transmission timer controller 265. In addition, based on the data type identified by the base station 200, the controller 310 adjusts the parameters that are employed by the reception time controller 350 and the reception window size controller 360. As a result, the appropriate retransmission control processes can respectively be performed for real time data and non-real time data. It should be noted that in this embodiment, a parameter adjuster is provided both for the base station 200 and the mobile station 300.

In this embodiment, the parameters used by the base station 200 for retransmission control are the maximum retransmission count, the transmission window size and the transmission side delay. The parameters employed by the mobile station 300 for retransmission control are the reception delay and the reception window size. Thus, the parameters employed for general retransmission control can be appropriately set for real time data and non-real time data.

Furthermore, in this embodiment, when the data type is non-real time, the controller 310 sets a larger reception window size and a longer reception side delay than those set when the data type is real time. Likewise, when the data type is non-real time, the controller 210 sets a greater value for the maximum retransmission count and a larger transmission window size than those set when the data type is real time. Therefore, appropriate parameters can be set for non-real time data, which is tolerant of delays to a certain degree, and is sensitive to data errors, and for real time data, which is tolerant of errors, to a certain degree, but does not permit long delays.

That is, for real time data that is sensitive to delays, only a small retransmission count, a small transmission window size and a small reception window size are set to prevent delays. Furthermore, when the retransmission count for real time data is reduced, the overhead for a channel can be reduced so that the channel can be effectively utilized. On the other hand, for non-real time data that is tolerant of delays but is sensitive to errors (losses), the rate at which errors occur can be reduced by setting the retransmission count as large as possible.

Moreover, when the data type is real time, the status report generator 390 generates one status report for one transport block, and the data comunicator 330 transmits the status report. On the other hand, when the data type is non-real time, the status report generator 390 generates one status report for a group of transport blocks, and the data comunicator 330 transmits the status report. Furthermore, when the data type is non-real time, the status report generator 390 generates a status report only upon the reception of a status report request (polling data) from the base station 200, and the data comunicator 330 transmits the status report. With this arrangement, quick retransmission is enabled for real time data that does not permit great delays, while radio resources can be saved for non-real time data that is tolerant of delays to a certain degree.

When the data type is non-real time, the transport block generator 280 generates a transport block by dividing a higher block, or by coupling higher blocks. On the contrary, when the data type is real time, the transport block generator 280 generates a transport block by dividing a higher block. Thus, the transmission/reception of a higher block is enabled by employing an appropriate method for the exchange of data in the MAC layer. In addition, when the data type is real time, the transport block generator 280 does not couple higher blocks. Thus, for real time data, the higher block reconfigurer 370 can rapidly perform the higher block reconfiguration process.

Furthermore, when two types of data including real time data and non-real time data are transmitted via a single communication channel, the data type identifier 240 may identify the type of data transmitted via the communication channel as real time data. In this case, delays when real time data is transmitted can be preferentially prevented.

Furthermore, for identification of a data type, the data type identifier 240 employs a traffic class that is included in a transport block, or a traffic class identifier that is transmitted to the base station 200 by a device other than the base station 200 and the mobile station 300. Thus, the data type identifier 240 can identify the data type based on data employed by the general communication system.

### [Second Embodiment]

### (Transmitter)

An explanation will now be given for data transmissions by base stations 200 to mobile stations 300, i.e., a case in which the base stations 200 serve as transmitters.

Since the base stations 200 according to this embodiment have the same configuration as the base stations 200 in the first embodiment, an explanation will be given only for a status report analyzer 270, which is a constituent feature having a different function from that in the first embodiment.

The status report analyzer 270, as in the first embodiment, analyzes a status report to determine whether or not a transport block has been correctly received. However, the status report analyzer 270 of this embodiment also determines whether or not the status report itself has been correctly received.

In this embodiment, redundant data, such as a CRC (Cyclic Redundancy Code), that enables error detection is provided for a status report transmitted by the mobile station 300. The status report analyzer 270 detects errors included in the status report based on the redundant data that is provided to the status report obtained from a data comunicator 230.

When an error is detected from the status report, the status report analyzer 270 discards the status report, and retransmits a transport block that corresponds to the TSN which is assumed to be included in the status report, i.e., a transport block that corresponds to the status report.

When an error in the status report is detected, the status report analyzer 270 may request that the mobile station 300 retransmit the status report.

On the other hand, when no error is detected in status report, the status report analyzer 270 examines the contents of the status report in the same manner as in the first embodiment.

### (Receiver)

An explanation will now be given for the transmission of data by the base stations 200 to the mobile stations 300, i.e., a case in which the mobile stations 300 serve as receivers.

Since the mobile stations 300 in this embodiment have the same configuration as the mobile stations 300 in the first embodiment, an explanation will be given only for a controller 310 and a status report generator 390 which are constituent features having different functions from those in the first embodiment.

The controller 310, as well as the controller 310 in the first embodiment, controls the operation of the entire mobile station 300, and also serves as a parameter adjuster for adjusting the reception window size and the length of a reception side delay.

In this embodiment, the controller 310 also adjusts the data length of redundant data provided for a status report. As described above, non-real time data is tolerant of delays to a certain degree, and is sensitive to errors, while real time data is tolerant of errors to a certain degree, but does not permit a large delay. Thus, when the data type is non-real time, the controller 310 sets a larger data length for the redundant data than when the data type is real time.

Specifically, when the data type is non-real time, the controller 310 sets a data length NC1 for the redundant data, and when the data type is real time, it sets a data length NC2, which is smaller than NC1. It should be noted that the values of NC1 and NC2 may be determined by the controller 310, or may be determined by another device, such as a radio network controller (RNC), and be transmitted to the mobile station 300. Furthermore, when the data type is real time, the data length NC2 for the redundant data provided for the status report may be set to zero.

The status report generator 390, as well as the status report generator 390 in the first embodiment, generates a status report indicating whether or not a transport block has been correctly received.

Moreover, in this embodiment, the status report generator 390 also provides redundant data for the generated status report. Specifically, the status report generator 390 obtains the data length of the redundant data set by the controller 310. The status report generator 390 provides the number of redundant data obtained from the controller 310 to the status report, and then inputs the resultant status report to the data comunicator 330. It should be noted that when the data length of redundant data is set to zero by the controller 310, the status report generator 390 does not provide redundant data for the status report.

### (Data Transmission Method)

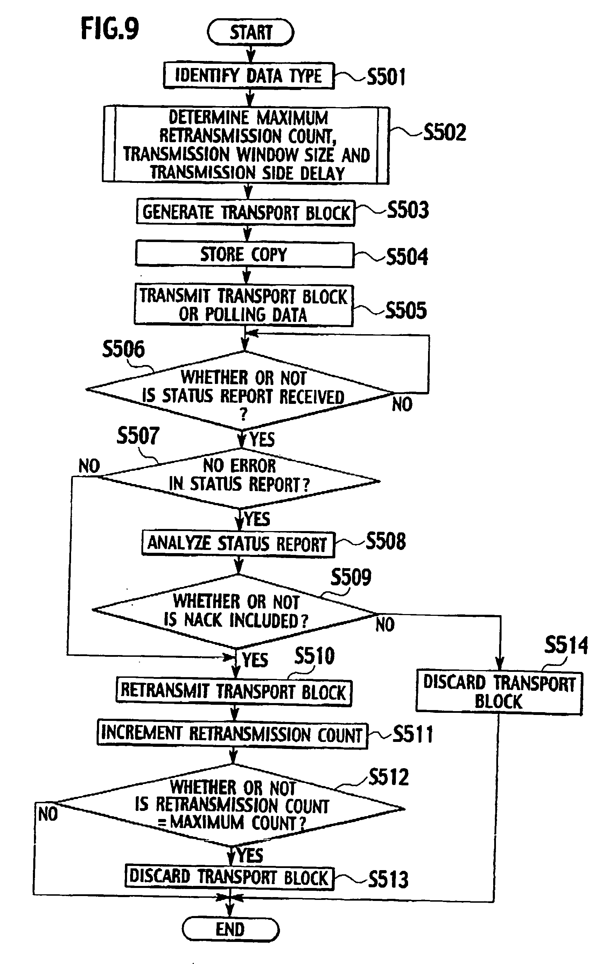

While referring to Fig. 9, an explanation will now be given for a data transmission method according to the second embodiment, performed by the base station 200 that serves as a transmitter.

Steps S501 to S506 are the same as steps S101 to S106 in Fig. 5.

In step S507, the status report analyzer 270 determines whether or not errors are included in a status report based on redundant data.

When it is determined in step S507 that no errors are included in the status report, the processes in steps S508 to S514 are performed. The processes in steps S508 to S514 are the same as those in steps S107 to S113 in Fig. 5. It should be noted that the processes in steps S508 to S514 are also performed when redundant data are not provided for the status report.

On the other hand, when it is determined in step S507 that an error is included in the status report, a transport block is retransmitted in the same manner as when it is determined that a NACK is included in the status report. That is, the processes in step S510 to S512 are performed.

### (Data Reception Method)

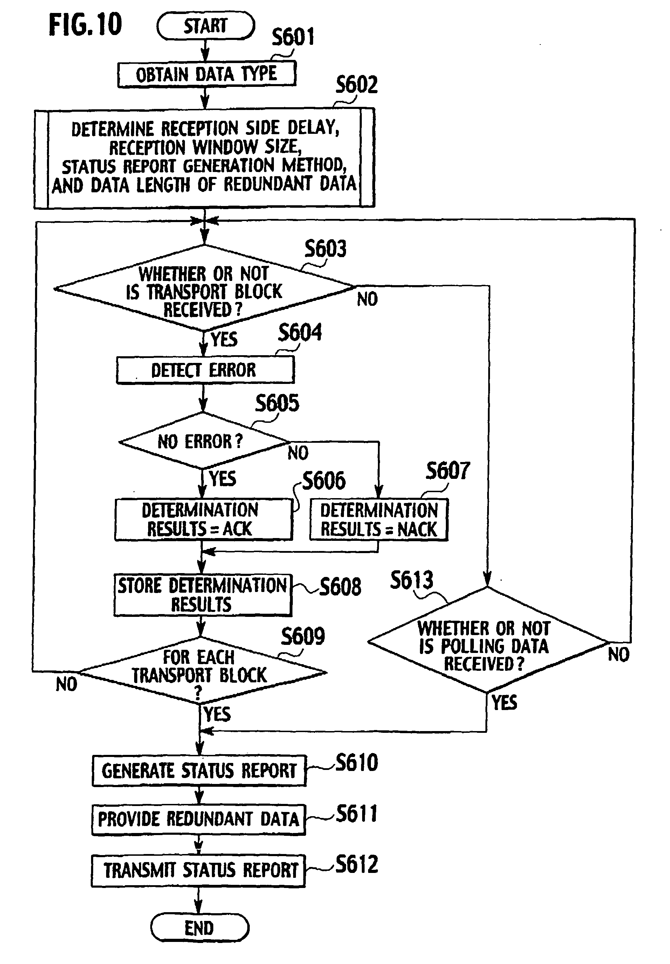

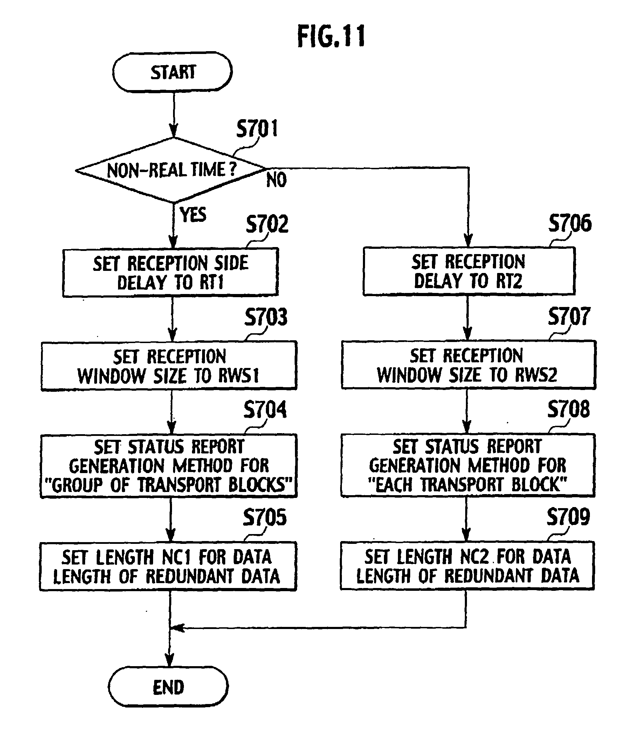

Next, while referring to Figs. 10 and 11, an explanation will be given for a data reception method according to the second embodiment, performed by the mobile station 300 that serves as a receiver.

Step S601 is the same as step S301 in Fig. 7.

In step S602, the controller 310 sets the data length of redundant data in addition to the reception side delay, the reception window size, and the status report generation method.

Steps S603 to S610 are the same as steps S303 to S310 in Fig. 7.

In step S611, the status report generator 390 provides redundant data for the status report. It should be noted that when zero is set as the data length of redundant data by the controller 310, the status report generator 390 does not provide redundant data for the status report.

In step S612, the data comunicator 330 transmits, to the base station 200, the status report that is obtained from the status report generator 390 and that includes the redundant data.

Step S613 is the same as step S312 in Fig. 7.

Fig. 11 is a flowchart showing the process for setting the data length of redundant data in addition to the reception side delay, the reception window size, and the status report generation method in accordance with the data type. That is, Fig. 11 is the flowchart for explaining the process in step S602 in Fig. 10.

Steps S701 to S704 are the same as steps S401 to S404 in Fig. 8.

When it is determined in step S701 that the data type is non-real time, in step S705 the controller 310 sets a data length NC1 for the redundant data.

Steps S706 and S707 are the same as steps S405 and S406 in Fig. 8.

When it is determined in step 5701 that the data type is not non-real time, i.e., is real time, in step S708, the controller 310 sets a data length NC2, which is smaller than NC1, for the redundant data.

### (Effect)

By employing the status report analyzer 270, the controller 310 and the status report generator 390 in this embodiment, the following effects can be obtained, in addition to the effects acquired in the first embodiment.

The status report generator 390 generates a status report in which redundant data that enables error detection is provided, and the data comunicator 330 transmits the status report to the base station 200. Based on the redundant data, the status report analyzer 270 detects errors in the received status report. With this arrangement, error tolerance of the status report is enhanced. Accordingly, when the base station 200 that serves as a transmitter analyzes a status report, the occurrence of errors can be prevented. As a result, an unnecessary retransmission process in the MAC layer and an unnecessary retransmission process in a higher layer can be avoided, and the throughput characteristic of the communication system can be improved.

Furthermore, when the data type is non-real time, the data length of redundant data is greater than when the data type is real time. Thus, sufficient error tolerance can be obtained for real time data when a requirement for the error tolerance of the data is relatively low, and the overhead for a channel can be eliminated to provide effective use of the channel. On the other hand, as for non-real time data that is sensitive to errors, the occurrence of an ACK/NACK error, in which the transmitter determines that the receiver has correctly received data although the data have actually not been correctly received, can be prevented, and highly reliable ACK/NACK transmission/reception is enabled.

### [Third Embodiment]

### (Transmitter)

An explanation will now be given for data transmission by base stations 200 to mobile stations 300, i.e., a case in which the base stations 200 serve as transmitters.

The base stations 200 in this embodiment have the same configuration as the base stations 200 in the first embodiment. Accordingly, an explanation will be given only for a status report analyzer 270 which is a constituent feature having a different function from that in the first embodiment.

The status report analyzer 270, as well as the status report analyzer 270 in the first embodiment, analyzes a status report to determine whether or not a transport block has been correctly received.

It should be noted, however, that in this embodiment the mobile station 300 repetitively transmits the status report for a predetermined number of times (RN). Therefore, when the status report analyzer 270 obtains, via a data comunicator 230, a status report that has the same contents for RN times, the status report analyzer 270 determines that a valid status report has been received, and examines the contents of the status report.

On the other hand, when the obtained RN status reports do not have the same contents, the status report analyzer 270 determines that invalid status reports have been received and discards the RN status reports.

When the data type is non-real time, a greater value is set as the predetermined repetition count RN than when the data type is real time. It should be noted that the predetermined repetition count RN may be set by a controller 210, or a controller 310 of the mobile station 300, or by another device such as a ratio network controller (RNC), and transmitted to the base station 200. It should be noted, however, that there should be agreement between the base station and the mobile station 300 on the predetermined repetition count RN.

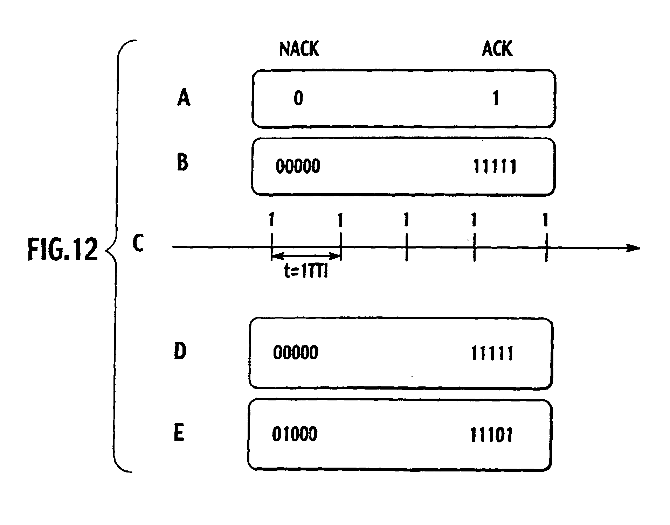

In this embodiment, the process for transmitting and analyzing a status report will now be described while referring to Figs. 12A to 12E. In the example shown in Figs. 12A to 12E, a status report is formed using one bit, and as shown in Fig. 12A, a status report representing NACK is "0", and a status report representing ACK is "1". The repetition count RN is five.

When five status reports "0", as indicated by bit sequence "00000" in Fig. 12D, are obtained via the data comunicator 230, the status report analyzer 270 determines that a valid status report "0" has been received. Then, the status report analyzer 270 determines that the status report is obtained which has the content of a NACK. Furthermore, when five status reports "1", as indicated by bit sequence "11111" in Fig. 12D, are obtained via the data comunicator 230, the status report analyzer 270 determines that a valid status report "1" has been received. Then, the data comunicator 230 determines that a status report is obtained which has the content of an ACK.

On the other hand, when five status reports do not have the same contents, such as bit sequence "01000" or "11101" shown in Fig. 12E, the status report analyzer 270 determines that the obtained status report is invalid and discards the five status reports.

### (Receiver)

An explanation will be given for the transmission of data by the base stations 200 to the mobile stations 300, i.e., a case in which the mobile stations 300 serve as receivers.

Since the mobile stations 300 in this embodiment have the same configuration as the mobile stations 300 in the first embodiment, an explanation will be given for only a status report generator 390 which is a constituent feature having a different function from that in the first embodiment.

The status report generator 390, as well as the status report generator 390 in the first embodiment, generates a status report indicating whether or not a transport block has been correctly received.

In this embodiment, the status report generator 390 repetitively inputs a status report to the data comunicator 330 for a predetermined number of times (RN).

Then, the data comunicator 330 repetitively transmits the obtained status report to the base station 200 for the predetermined number of times (RN).

Note that the predetermined repetition count RN is set in the above described manner.

A method for transmitting a status report for a predetermined number of times will now be described while referring to Figs. 12A to 12E. As shown in Fig. 12A, a status report representing a NACK is "0", and a status report representing an ACK is "1". The repetition count RN is five.

As shown in Fig. 12B, the status report generator 390 inputs the same status report to the data comunicator 330 for five times. When a generated status report represents a NACK, the status report generator 390 inputs a status report that includes "0" to the data comunicator 330 for five times. When a generated status report represents an ACK, the status report generator 390 inputs a status report that includes "1" to the data comunicator 330 for five times.

Fig. 12C is a diagram for explaining timings for the transmission of five status reports. During a predetermined time intervals t, the status report generator 390 inputs five status reports to the data comunicator 330. In the example in Fig. 12C, status reports are input at the predetermined time interval t = 1TTI.

### (Data Transmission Method)

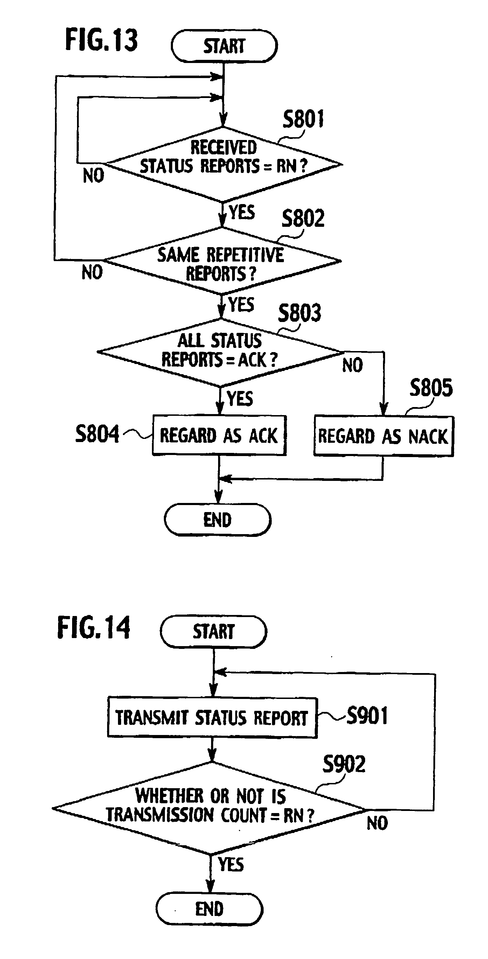

While referring to Fig. 13, an explanation will be given for a data transmission method according to the third embodiment, performed by the base station 200 that serves as a transmitter.

Fig. 13 is a flowchart showing the process for employing a plurality of status reports to determine whether a transport block has been correctly received. That is, Fig. 13 is a flowchart for explaining the processes in steps S106 to S108 in Fig. 5.

In step S801, the status report analyzer 270 determines whether or not RN status reports have been received.

When the status report analyzer 270 determines in step S801 that the RN status reports have been received, in step S802, the status report analyzer 270 determines whether or not all these status reports include the same contents.

When the status report analyzer 270 determines in step S802 that all the RN status reports include the same contents, in step S803, the status report analyzer 270 determines whether or not the contents of all the status reports are ACK.

When the status report analyzer 270 determines in step S803 that the contents of all the status reports are ACK, in step S804 the status report analyzer 270 regards the content of the status report as ACK.

On the other hand, when it is determined in step S803 that the contents of all the status reports are NACK, in step S805 the status report analyzer 270 regards the content of the status report as NACK.

The process following step S113 in Fig. 5 is performed after the process in step S804 or the process in step S805 has been performed.

When the status report analyzer 270 determines in step S801 that the RN status reports have not been received, or when the status report analyzer 270 determines in step S802 that all the RN status reports do not include the same contents, the status report analyzer 270 deLermiues that the received status report is not valid. Accordingly, the program control returns to step S801 and continues the process.

Note that when the status report analyzer 270 determines a valid status report has not been received and program control is returned to step S801, this case corresponds to the case in which it is determined in step S106 in Fig. 5 that the status report has not been received.

### (Data Reception Method)

While referring to Fig. 14, an explanation will now be given for a data reception method, according to the third embodiment, performed by the mobile station 300 that serves as a receiver.

Fig. 14 is a flowchart showing the process for providing one status report through repetitious transmission. That is, Fig. 14 is a flowchart for explaining the process in step S311 in Fig. 7.

In step S901, the data comunicator 330 transmits a status report obtained from the status report generator 390.

In step S902, the status report generator 390 increments a transmission count by one, and determines whether or not the number of times that the status report has been input to the data comunicator 330, i.e., the transmission count, has reached RN.

When the status report generator 390 determines in step S902 that the transmission count has reached RN, the process of inputting the status report to the data comunicator 330 is terminated. On the other hand, when the status report generator 390 determines in step S902 that the transmission count has not yet reached RN, the program control returns to step S901. Then, the status report generator 390 again inputs the status report to the data comunicator 330 and the data comunicator 330 transmits the status report.

### (Effect)

According to the status report analyzer 270 and the status report generator 390 in this embodiment, in addition to the effects acquired in the first embodiment, the following effects are obtained.

The data comunicator 330 repetitively transmits a status report obtained from the status report generator 390, and when status reports having the same contents are received for the predetermined repetition count, the status report analyzer 270 determines that a valid status report has been received. Therefore, an ACK/NACK error, in which the transmitter determines that the receiver has correctly received data although the data have actually not been correctly received, can be prevented. Thus, highly reliable ACK/NACK transmission/reception, i.e., transmission/reception of a status report is enabled.

When the data type is non-real time, the repetition count is greater than when the data type is real time. Therefore, for real time data that tolerates errors to a certain degree, sufficient error tolerance can be obtained, and the overhead for a channel can be eliminated to provide effective use of the channel. On the other hand, as for non-real time data that tolerates delays to a certain degree, but is sensitive to errors, since many status reports are exchanged, more reliable ACK/NACK transinission/reception can be performed.

### [Other Embodiments]

The present invention has been described by employing the above described embodiments- However, it should be understood that the present invention is not limited to the descriptions and drawings of this disclosure, and that from this disclosure, it will be obvious to one having ordinary skill in the art that various other modifications, embodiments and applicable techniques are possible.

For example, the components provided in a base station 200 in each of the embodiments may be included in a mobile station 300, and the components provided in a mobile station 300 may be included in a base station 200. In this case, the retransmission control process for data to be transmitted from the mobile station 300 to the base station 200 can be appropriately performed in accordance with the data type.

Moreover, the components included in the base station 200 in each embodiment may be provided separately for a plurality of devices, and the components included in the mobile station 300 may be provided separately for a plurality of devices. In this case, these devices should be connected, for example, by a bus, so that they can exchange data.

Furthermore, according to the above described embodiments, the data type identifier 240 of the base station 200 identifies a data type, and the controller 210 and the controller 310, which have obtained the data type from the base station 200, adjust parameters. However, the base station 200 may set all the parameters to be used for retransmission control and notify the mobile station 300, or the mobile station 300 may set all the parameters and notify the base station 200. That is, the parameter adjuster may be provided for any one of the transmitter and the receiver.

Furthermore, another device, such as a radio network control device, may set the parameters to be used for retransmission control and notify the base station 200 and the mobile station 300. That is, the parameter adjuster may be provided for a device other than the transmitter and the receiver.

According to the third embodiment, when all the status reports do not include the same contents, the status report analyzer 270 determines that the status report is invalid. Instead of this, when, for example, 50% or more of the status reports include the same contents, the status report analyzer 270 may determine that a valid status report has been obtained. In this case, the status report analyzer 270 employs the contents indicated by 50% or more of the status reports to determine whether or not a transport block has been correctly received.

In addition, the configurations of the base station 200 and the mobile station 300 in the second and the third embodiments may be employed together. That is, the status report analyzer 270 in the base station 200 and the controller 310 and the status report generator 390 in the mobile station 300 may include not only the functions included for the first embodiment, but also the function for providing the redundant data for a status report and the function for transmitting repetitively the status reports.

Moreover, in the above embodiment, since the base stations 200 have served as transmitters, and the mobile stations 300 have served as receivers, data have been exchanged as higher blocks or transport blocks via a radio link established between the base stations 200 and the mobile stations 300. However, the transmission path is not limited to a wireless path, and may be a wired path.

Also, in the above described embodiments, a data block that is a data unit to be retransmitted has been defined as a transport block handled in the MAC layer. However, a data block may be a data unit handled in a protocol layer that is higher, for example, than the MAC layer.

## Claims

1. A communication system (1) comprising a transmitter (200) for transmitting two types of data including real time data and non-real time data to a receiver (300) for a respective data block, the communication system comprising:
a retransmission requester (390) configured to transmit a request for retransmission of an erroneous data block which is the data block that is not correctly received by the receiver (300), regardless of whether the data type is real time or non-real time;
a retransmitter (230) configured to retransmit the erroneous data block in accordance with the request for retransmission;
a data type identifier (240) configured to identify the data type as real time or non-real time; and
a parameter adjuster (250,260,265) configured to adjust a parameter for data retransmission control of the two data types based on the data type identified by the data type identifier (240), the system being **characterized in that**:
the retransmission requester (390) is arranged to repetitively transmit a reception status notification for a predetermined number of times, and
the predetermined number of times for the data type of non-real time is greater than the number of times for the data type of real time.

2. The communication system (1) according to claim 1, wherein the parameter comprises at least one of a window size, a delay, and a maximum retransmission count, which are used for data retransmission control.

3. The communication system (1) according to claim 2, wherein,
the parameter adjuster (250,260,265) is arranged to provide a value for each of the window size, the delay and the maximum retransmission count for the data type of non-real time, each value being greater than the corresponding value provided for the data type of real time.

4. The communication system according to claim 1, further comprising:
a reception status notification generator configured to generate one reception status notification indicating whether or not the data blocks have been correctly received by the receiver for a plurality of data blocks when the data type is non real time, or to generate one reception status notification for one data block when the data type is real time,
wherein the request for retransmission is the reception status notification indicating that the data block has not been correctly received.

5. The communication system (1) according to claim 1, further comprising:
a reception status notification requester (380) configured to request the receiver (300) to transmit the reception status notification indicating whether the data block has been correctly received by the receiver (300), when the data type is non-real time; and
a reception status notification generator (390) configured to generate the reception status notification, wherein,
the retransmission requester (380) is arranged to transmit the reception status notification generated by the reception status notification generator (390), when the request for the reception status notification is received from the reception status notification requester, and
the retransmission request is the reception status notification indicating that the data block has not been received correctly.

6. The communication system (1) according to any one of claims 4 and 5, wherein,
the reception status notification generator (390) is arranged to provide redundant data that enables error detection for the reception status notification, and
the data length of redundant data for the data type of non-real time is greater than the data length for the data type of real time.

7. The communication system (1) according to claim 1, further comprising:
a data block generator (280) configured to generate a data block by dividing or coupling a higher block which is a data unit to be handled in a protocol layer higher than a protocol layer which handles the data block, when the data type is non-real time, and to generate the data block by dividing the higher block, when the data type is real time; and
a higher block reconfigurer (370) arranged to perform a reverse process of generating the data block, the reverse process being a process to reconfigure the higher block from the data block generated by the data block generator (280).

8. The communication system (1) according to claim 1, wherein,
the data type identifier (240) is arranged to identify the data type of the data transmitted through a single communication channel as real time, when both real time data and non-real time data are transmitted through the single communication channel.

9. The communication system (1) according to any one of claims 1 to 8,
wherein the data type identifier (240) is arranged to identify the data type based on a traffic class identifier included in the data block or on a traffic class transmitted by a device of the communication system, other than the transmitter (200) and the receiver (300), to the transmitter (200).

10. A receiver (300) for receiving two types of data including real time data and non-real time data from a transmitter (200) for a respective data block, the receiver (300) comprising:
a retransmission requester (390) configured to transmit a request for retransmission of an erroneous data block which is the data block that is not correctly received by the receiver (300), regardless of whether the data type is real time or non-real time;
an erroneous data block receiver (330) configured to receive the erroneous data block which is retransmitted in accordance with the request for retransmission;
a data type acquirer (340) configured to obtain the data type from the transmitter (200); and
a parameter adjuster (350,360,370) configured to adjust a parameter for data retransmission control for the two data types based on the data type identified by the data type acquirer (340), the receiver being **characterized in that:**
the retransmission requester (390) is arranged to repetitively transmit a reception status notification for a predetermined number of times, and
the predetermined number of times for the data type of non-real time is greater than the number of times for the data type of real time.

## Patentansprüche

1. Kommunikationssystem (1), umfassend einen Sender (200) zum Senden von zwei Arten von Daten einschließlich Echtzeitdaten und Nicht-Echtzeitdaten an einen Empfänger (300) für einen entsprechenden Datenblock, wobei das Kommunikationssystem umfasst:
einen Wiedersendungsanforderer (390), der dafür konfiguriert ist, eine Anforderung zur Wiedersendung eines fehlerhaften Datenblockes zu senden, welches der Datenblock ist, der nicht korrekt durch den Empfänger (300) empfangen ist, unabhängig davon, ob der Datentyp Echtzeit oder Nicht-Echtzeit ist;
einen Wiedersender (230), der dafür ausgelegt ist, den fehlerhaften Datenblock anhand der Anforderung zur Wiedersendung wieder zu senden;
einen Datentyp-Identifizierer (240), der dafür konfiguriert ist, den Datentyp als Echtzeit oder Nicht-Echtzeit zu identifizieren; und
einen Parametereinsteller (250, 260, 265), der dafür konfiguriert ist, einen Parameter zur Datenwiedersendungssteuerung der zwei Datentypen einzustellen, basierend auf dem durch den Datentyp-Identifizierer (240) identifizierten Datentyp, wobei das System **dadurch gekennzeichnet ist, dass**
der Wiedersendungsanforderer (390) dafür ausgelegt ist, eine Empfangsstatusnotifikation für eine vorgegebene Anzahl von Malen repetitiv zu senden, und
die vorgegebene Anzahl von Malen für den Datentyp von Nicht-Echtzeit größer ist als die Anzahl von Malen für den Datentyp von Echtzeit.

2. Kommunikationssystem (1) gemäß Anspruch 1, wobei der Parameter zumindest einen von einer Fenstergröße, einer Verzögerung und einer maximalen Wiedersendungszählung umfasst, die für die Datenwiedersendungssteuerung verwendet werden.

3. Kommunikationssystem (1) gemäß Anspruch 2, wobei
der Parametereinsteller (250, 260, 265) dafür ausgelegt ist, einen Wert für jedes von Fenstergröße, Verzögerung und maximalen Wiedersendungszählung für den Datentyp Nicht-Echtzeit bereitzustellen, wobei jeder Wert größer ist als der für den Datentyp Echtzeit vorgesehene, entsprechende Wert.

4. Kommunikationssystem gemäß Anspruch 1, weiter umfassend:
einen Empfangsstatusnotifikationsgenerator, der dafür konfiguriert ist, eine Empfangsstatusnotifikation zu erzeugen, die anzeigt, ob die Datenblöcke durch den Empfänger für eine Mehrzahl von Datenblöcken korrekt empfangen worden sind oder nicht, wenn der Datentyp Nicht-Echtzeit ist, oder eine Empfangsstatusnotifikation für einen Datenblock zu erzeugen, wenn der Datentyp Echtzeit ist,
wobei die Anforderung zur Wiedersendung die Empfangsstatusnotifikation ist, die anzeigt, dass der Datenblock nicht korrekt empfangen worden ist.

5. Kommunikationssystem (1) gemäß Anspruch 1, weiter umfassend:
einen Empfangsstatusnotifikations-Anforderer (380), der dafür konfiguriert ist, den Empfänger (300) aufzufordern, die Empfangsstatusnotifikation zu senden, die anzeigt, ob der Datenblock korrekt durch den Empfänger (300) empfangen worden ist, wenn der Datentyp Nicht-Echtzeit ist; und
einen Empfangsstatusnotifikationsgenerator (390), der dafür konfiguriert ist, die Empfangsstatusnotifikation zu erzeugen, wobei
der Wiedersendungsanforderer (380) dafür ausgelegt ist, die durch den Empfangsstatusnotifikationsgenerator (390) erzeugte Empfangsstatusnotifikation zu senden, wenn die Anforderung für die Empfangsstatusnotifikation aus dem Empfangsstatusnotifikationsanforderer empfangen wird, und
die Wiedersendungsanforderung die Empfangsstatusnotifikation ist, die anzeigt, dass der Datenblock nicht korrekt empfangen worden ist.

6. Kommunikationssystem (1) gemäß einem der Ansprüche 4 und 5, wobei
der Empfangsstatusnotifikationsgenerator (390) dafür ausgelegt ist, redundante Daten bereitzustellen, die eine Fehlerdetektion für die Empfangsstatusnotifikation ermöglichen, und
die Datenlänge von redundanten Daten für den Datentyp Nicht-Echtzeit größer als die Datenlänge für den Datentyp Echtzeit ist.

7. Kommunikationssystem (1) gemäß Anspruch 1, weiter umfassend:
einen Datenblockgenerator (280), der dafür konfiguriert ist, einen Datenblock durch Unterteilen oder Koppeln eines höheren Blocks, der eine Dateneinheit, die in einer höheren Protokollschicht als einer Protokollschicht zu handhaben ist, die den Datenblock handhabt, zu erzeugen, wenn der Datentyp Nicht-Echtzeit ist, und den Datenblock durch Unterteilen des höheren Blockes zu erzeugen, wenn der Datenblock Echtzeit ist; und
einen höheren Block-Rekonfigurator (370), der dafür ausgelegt ist, einen umgekehrten Prozess des Erzeugens des Datenblockes durchzuführen, wobei der umgekehrte Prozess ein Prozess zur Rekonfigurierung des höheren Blocks aus dem vom Datenblockgenerator (280) erzeugten Datenblock ist.

8. Kommunikationssystem (1) gemäß Anspruch 1, wobei
der Datentyp-Identifikator (240) dafür ausgelegt ist, den Datentyp der über einen einzelnen Kommunikationskanal gesendeten Daten als Echtzeit zu identifizieren, wenn sowohl Echtzeitdaten als auch Nicht-Echtzeitdaten über den einzelnen Kommunikationskanal gesendet werden.

9. Kommunikationssystem (1) gemäß einem der Ansprüche 1 bis 8,
wobei der Datentyp-Identifikator (240) dafür ausgelegt ist, den Datentyp basierend auf einem Verkehrsklassen-Identifikator, der im Datenblock enthalten ist, oder auf einer Verkehrsklasse, die durch eine andere Vorrichtung des Kommunikationssystems als der Sender (200) und der Empfänger (300) an den Sender (200) gesendet wird, zu identifizieren.

10. Empfänger (300) zum Empfangen von zwei Datentypen einschließlich Echtzeitdaten und Nicht-Echtzeitdaten, von einem Sender (200) für einen entsprechenden Datenblock, wobei der Empfänger (300) umfasst:
einen Wiedersendungsanforderer (390), der dafür konfiguriert ist, eine Anforderung zur Wiedersendung eines fehlerhaften Datenblockes zu senden, welches der Datenblock ist, der nicht korrekt durch den Empfänger (300) empfangen ist, unabhängig davon, ob der Datentyp Echtzeit oder Nicht-Echtzeit ist;
einen fehlerhaften Datenblock-Empfänger (330), der dafür konfiguriert ist, den fehlerhaften Datenblock zu empfangen, der gemäß der Anforderung zur Wiedersendung wieder gesendet wird;
einen Datentyperfasser (340), der dafür konfiguriert ist, den Datentyp aus dem Sender (200) zu erhalten; und
einen Parametereinsteller (350, 360, 370), der dafür konfiguriert ist, einen Parameter zur Datenwiedersendungssteuerung der zwei Datentypen einzustellen, basierend auf dem durch den Datentyperfasser (340) identifizierten Datentyp, wobei der Empfänger **dadurch gekennzeichnet ist, dass**
der Wiedersendungsanforderer (390) dafür ausgelegt ist, eine Empfangsstatusnotifikation für eine vorgegebene Anzahl von Malen repetitiv zu senden, und
die vorgegebene Anzahl von Malen für den Datentyp von Nicht-Echtzeit größer ist als die Anzahl von Malen für den Datentyp von Echtzeit.

## Revendications

1. Système de communication (1) comprenant un émetteur (200) pour émettre deux types de données incluant des données en temps réel et des données en temps différé vers un récepteur (300) pour un bloc de données respectif, le système de communication comprenant :
un demandeur de retransmission (390) configuré pour émettre une demande de retransmission d'un bloc de données erroné qui est le bloc de données qui n'est pas correctement reçu par le récepteur (300), indépendamment du fait que le type de données est en temps réel ou en temps différé ;
un réémetteur (230) configuré pour réémettre le bloc de données erroné selon la demande de retransmission ;
un identificateur de type de données (240) configuré pour identifier le, type de données en tant que temps réel ou temps différé ; et
un régleur de paramètre (250, 260, 265) configuré pour régler un paramètre pour la commande de retransmission de données des deux types de données sur base du type de données identifié par l'identificateur de type de données (240), le système étant **caractérisé en ce que** :
le demandeur de retransmission (390) est agencé pour émettre répétitivement un avis d'état de réception un nombre prédéterminé de fois, et
le nombre prédéterminé de fois pour le type de données en temps différé est plus grand que le nombre de fois pour le type de données en temps réel.

2. Système de communication (1) selon la revendication 1, dans lequel le paramètre comprend au moins l'un d'une taille de fenêtre, d'un retard, et d'un comptage maximal de retransmission, qui sont utilisés pour la commande de retransmission de données.

3. Système de communication (1) selon la revendication 2, dans lequel,
le régleur de paramètre (250, 260, 265) est agencé pour fournir une valeur pour chacun de la taille de fenêtre, du retard et du comptage maximal de retransmission pour le type de données en temps différé, chaque valeur étant plus grande que la valeur correspondante fournie pour le type de données en temps réel.

4. Système de communication selon la revendication 1, comprenant en outre :
un générateur d'avis d'état de réception configuré pour générer un avis d'état de réception indiquant si oui ou non les blocs de données ont été correctement reçus par le récepteur pour une pluralité de blocs de données lorsque le type de données est en temps différé, ou pour générer un seul avis d'état de réception pour un seul bloc de données quand le type de données est en temps réel,
dans lequel la demande de retransmission est l'avis d'état de réception indiquant que le bloc de données n'a pas été correctement reçu.

5. Système de communication (1) selon la revendication 1, comprenant en outre :
un demandeur d'avis d'état de réception (380) configuré pour demander au récepteur (300) de transmettre l'avis d'état de réception indiquant si le bloc de données a été correctement reçu par le récepteur (300), lorsque le type de données est en temps différé ; et
un générateur d'avis d'état de réception (390) configuré pour générer l'avis d'état de réception, dans lequel,
le demandeur de retransmission (380) est agencé pour transmettre l'avis d'état de réception généré par le générateur d'avis d'état de réception (390), lorsque la demande de l'avis d'état de réception est reçue en provenance du demandeur d'avis d'état de réception, et
la demande de retransmission est l'avis d'état de réception indiquant que le bloc de données n'a pas été reçu correctement.

6. Système de communication (1) selon l'une quelconque des revendications 4 et 5, dans lequel,
le générateur d'avis d'état de réception (390) est agencé pour fournir des données redondantes qui permettent une détection d'erreur pour l'avis d'état de réception, et
la longueur de données de données redondantes pour le type de données en temps différé est plus grande que la longueur de données pour le type de données en temps réel.

7. Système de communication (1) selon la revendication 1, comprenant en outre :
un générateur de bloc de données (280) configuré pour générer un bloc de données en divisant ou en couplant un bloc supérieur qui est une unité de données à traiter dans une couche de protocole supérieure à une couche de protocole qui traite le bloc de données, lorsque le type de données est en temps différé, et pour générer le bloc de données en divisant le bloc supérieur, lorsque le type de données est en temps réel ; et
un dispositif de reconfiguration de bloc supérieur (370) agencé pour effectuer un processus inverse de génération du bloc de données, le processus inverse étant un processus pour reconfigurer le bloc supérieur à partir du bloc de données généré par le générateur de bloc de données (280).

8. Système de communication (1) selon la revendication 1, dans lequel,
l'identificateur de type de données (240) est agencé pour identifier le type de données des données transmises par l'intermédiaire d'un seul canal de communication en tant que temps réel, quand tant des données en temps réel que des données en temps différé sont transmises par l'intermédiaire du seul canal de communication.

9. Système de communication (1) selon l'une quelconque des revendications 1 à 8,
dans lequel l'identificateur de type de données (240) est agencé pour identifier le type de données sur base d'un identificateur de classe de trafic inclus dans le bloc de données ou sur une classe de trafic transmise par un dispositif du système de communication, autre que l'émetteur (200) et le récepteur (300), à l'émetteur (200).

10. Récepteur (300) pour recevoir deux types de données incluant des données en temps réel et des données en temps différé en provenance d'un émetteur (200) pour un bloc de données respectif, le récepteur (300) comprenant :
un demandeur de retransmission (390) configuré pour transmettre une demande de retransmission d'un bloc de données erroné qui est le bloc de données qui n'est pas correctement reçu par le récepteur (300), indépendamment du fait que le type de données est en temps réel ou en temps différé ;
un récepteur de bloc de données erroné (330) configuré pour recevoir le bloc de données erroné qui est retransmis selon la demande de retransmission ;
un acquéreur de type de données (340) configuré pour obtenir le type de données en provenance de l'émetteur (200) ; et
un régleur de paramètre (350, 360, 370) configuré pour régler un paramètre pour une commande de retransmission de données pour les deux types de données sur base du type de données identifié par l'acquéreur de type de données (340), le récepteur étant **caractérisé en ce que** :
le demandeur de retransmission (390) est agencé pour transmettre répétitivement un avis d'état de réception un nombre prédéterminé de fois, et
le nombre prédéterminé de fois pour le type de données en temps différé est plus grand que le nombre de fois pour le type de données en temps réel.
